# EUROPÄISCHE PATENTANMELDUNG

(11) **EP 3 978 783 A1**
(43) Veröffentlichungstag der Anmeldung: **06.04.2022**
(21) Anmeldenummer: 20199251.8
(22) Anmeldetag: 30.09.2020
(51) Int. Cl.: F16H 57/025, F16H 57/08

(54) **ANORDNUNG MIT GEHÄUSEFLANSCH UND DREHMOMENTSTÜTZE, VERFAHREN**

(71) Anmelder: Flender GmbH, 46395 Bocholt (DE)
(72) Erfinder: Becka, Simon, 46487 Wesel (DE); Leuer, Philipp, 45130 Essen (DE); Schmeing, Marvin, 46399 Bocholt (DE)
(74) Vertreter: Michalski Hüttermann & Partner Patentanwälte mbB

(57) **Zusammenfassung**

Die Erfindung betrifft eine Anordnung (ARG) mit einem zumindest abschnittsweise ringförmig um eine Achse (X) verlaufenden Gehäuseflansch (CFL) und einer Drehmomentstütze (TSP), wobei eine erste Flanschanlagefläche (FC1) des Gehäuseflanschs (CFL) gegen eine Stützenanlagefläche (SCS) der Drehmomentstütze (TSP) verspannbar ist. Zur Verbesserung der Stabilität und zur Raumersparnis wird vorgeschlagen, dass der Gehäuseflansch (CFL) eine zweite Flanschanlagefläche (FC2) aufweist und die Drehmomentstütze (TSP) der Anordnung (ARG) als eine erste Drehmomentteilstütze (TS1) und eine zweite Drehmomentteilstütze (TS2) ausgebildet ist, wobei die erste Flanschanlagefläche (FC1) und eine zweite Flanschanlagefläche (FC2) an dem Gehäuseflansch (CFL) als sich gegenüberliegende Anlageflächen ausgebildet sind und die jeweilige Stützenanlagefläche (SCS) der ersten Drehmomentteilstütze (TS1) und der zweiten Drehmomentteilstütze (TS2) an den Flanschanlageflächen (FC1, FC2) des Gehäuseflanschs (CFL) derart anliegen, dass der Gehäuseflansch (CFL) zumindest teilweise zwischen den Anlageflächen der Drehmomentstütze (TSP) angeordnet ist.

## Beschreibung

Die Erfindung betrifft eine Anordnung mit einem zumindest abschnittsweise ringförmig um eine Achse verlaufenden Gehäuseflansch und einer Drehmomentstütze, wobei eine erste Flanschanlagefläche des Gehäuseflanschs gegen eine Stützenanlagefläche der Drehmomentstütze verspannbar ist.

Desweiteren betrifft die Erfindung eine Kombination umfassend mindestens zwei derartige Anordnungen.

Daneben umfasst die Erfindung auch ein computerimplementiertes Verfahren zur Simulation einer Anordnung nach mindestens einem der vorhergehenden Ansprüche und ein Computerprogrammprodukt zur Durchführung dieses Verfahrens mittels mindestens eines Computers.

Die Erfindungsgemäße Anordnung ist in der Regel und bevorzugt Bestandteil mindestens eines Getriebes, insbesondere eines Planetengetriebes. Getriebe, zum Beispiel Planetengetriebe, dienen der Wandlung von Drehmomenten hinsichtlich Größe und Richtung. Um bei Betrieb des Getriebes ein Mitdrehen von Getriebebauteilen, insbesondere der Getriebehülle zu verhindern muss sich das aufgebrachte Drehmoment abstützen.

An dem Gehäuse ist hierfür bei gattungsgemäßen Anordnungen ein Flansch vorgesehen, an dem Elemente zur Drehmomentausleitung vorgesehen werden können. Herkömmlich werden zur Drehmomentausleitung sogenannte Drehmomentstützen verwendet. Diese werden kraftschlüssig mit einem Gehäuseflansch verbunden.

Der Abtrag der hohen Stützkräfte ist häufig raumgreifend. Die hohen Kräfte können zu Verformungen führen, so dass es zu Laufunruhen kommen kann und zu erhöhtem Verschleiß. Bei der Verbindung zwischen dem Gehäuseflansch und der Drehmomentstütze ist es häufig notwendig, Passschrauben einzusetzen, um die hohen Kräfte zu übertragen. Dies führt zu hohen Kosten.

Für die Anwendung der Planetengetriebe besteht zudem der Wunsch die Getriebe möglichst eng aneinander zu positionieren. Bei der klassischen Drehmomentstütze begrenzt der Flanschdurchmesser den minimalen Abstand der Getriebe.

Eine gattungsgemäße Anordnung kommt in der EP992710-B1 zum Einsatz. Zur Beherrschung der hohen Kräfte sind dort mehrere Stützen vorgesehen.

Ausgehend von den zuvor beschriebenen Problemen liegt der Erfindung die Aufgabe zugrunde, eine Drehmomentstütze bereitzustellen, die in der Lage ist, hohe Kräfte weitestgehend verformungsfrei zu übertragen, sodass die Funktion des Getriebes nicht beeinträchtigt wird.

Zur Lösung der Aufgabe schlägt die Erfindung einer Anordnung der eingangs definierten Art vor, bei der der Gehäuseflansch eine zweite Flanschanlagefläche aufweist und die Drehmomentstütze der Anordnung als eine erste Drehmomentteilstütze und eine zweite Drehmomentteilstütze ausgebildet ist, wobei die erste Flanschanlagefläche und eine zweite Flanschanlagefläche an dem Gehäuseflansch als sich gegenüberliegende Anlageflächen ausgebildet sind und die jeweilige Stützenanlagefläche der ersten Drehmomentteilstütze und der zweiten Drehmomentteilstütze an den Flanschanlageflächen des Gehäuseflanschs derart anliegen, dass der Gehäuseflansch zumindest teilweise zwischen den Anlageflächen der Drehmomentstütze angeordnet ist.

Die erfindungsgemäße Anordnung gewährleistet eine Abtragung des anfallenden Differenzdrehmomentes, ohne dass in dem Gehäuseflansch eine Biegespannung anfällt, die zur Verformung führen kann.

Eine vorteilhafte Weiterbildung der Erfindung sieht vor, dass der Gehäuseflansch sich axial von der ersten Flanschanlagefläche zu der zweiten Flanschanlagefläche erstreckende Löcher aufweist, durch die sich Befestigungselemente zur Befestigung der Drehmomentstütze erstrecken, derart, dass die erste und die zweite Flanschanlagefläche des Gehäuseflanschs mittels der Befestigungselemente gegen die Stützenanlageflächen der Drehmomentstütze verspannbar ist.

Besonders bevorzugt kommen als Befestigungselemente Standardschrauben zum Einsatz, die mit den sich durch den Gehäuseflansch erstreckenden Löchern ein Standardspiel aufweisen. Hier müssen keine Passschrauben verwendet werden, da die erfindungsgemäße Konstruktion mit normalen Befestigungsschrauben geeignet ist, das volle Drehmoment über die erfindungsgemäße Drehmomentstützenkonstruktion abzutragen.

Das bevorzugte Einsatzgebiet der Erfindung liegt im Bereich von Getrieben, wie sie an Windkraftanlagen oder an Mühlen vorgesehen sind. Diese Getriebe sind bevorzugt als Planetengetriebe ausgebildet.

Bei einer Anordnung nach der Erfindung erstreckt sich der Gehäuseflansch bevorzugt entlang einer Umfangsrichtung um eine sich axial erstreckende Welle der Anordnung. Der Gehäuseflansch hat hierbei eine bevorzugt kreisförmige bzw. ringförmige Ausbildung. Der Gehäuseflansch kann hierbei Bestandteil eines bevorzugt gegossenen Gehäuses für das Getriebe sein.

Zur effektiven Abtragung des Differenzdrehmomentes ist es zweckmäßig, wenn die Stützenanlagefläche mindestens einer Drehmomentteilstütze sich entlang der Flanschanlagefläche zwischen 120° - 270° der Umfangsrichtung erstrecken.

Besonders effektiv werden sowohl der Bauraum als auch die eingesetzten Konstruktionsmittel genutzt, wenn zumindest einige der Befestigungselemente sich axial durch koaxiale Löeher in den beiden Drehmomentteilstützen und dem Gehäuseflansch erstrecken, derart, dass mittels jeder dieser Befestigungselemente die Flanschanlageflächen gegen die beiden Stützenanlageflächen der beiden Drehmomentteilstützen verspannbar sind. Auf diese Weise kommt der Vorteil der beidseitigen Anordnung jeweils einer Drehmomentstütze an dem Getriebeflansch - kurz: Zweischnittigkeit - besonders zum Tragen, weil die Schraubenvorspannkraft auf diese Weise doppelt wirkt, in dem Sinne, dass mittels jeweils einer Schraube beide Drehmomentteilstützen an dem Gehäuseflansch befestigt werden. Dementsprechend stehen den Schrauben jeweils quasi zwei Trennfugen zur Verfügung. Hierdurch kann die Anzahl der Schrauben deutlich verringert werden und die Stützen entsprechend kürzer ausgeführt werden was zu einer Materialeinsparung führt. Zudem entfallen teilweise aufwändige Schweißkonstruktionen

Damit der gewünschte Raumspareffekt eintritt, ist es zweckmäßig, wenn die beiden Drehmomentteilstützen sich im Wesentlichen radial von dem Gehäuseflansch fort erstrecken und jeweils in einen zumindest zu 50% identischen Winkelbereich in Umfangsrichtung räumlich in dem Bereich benachbart zum Gehäuseflansch angeordnet sind. Besonders bevorzugt sind die beiden gegenüberliegenden Drehmomentteilstützen gleich angeordnet und erstrecken sich in Umfangsrichtung über einen identischen Winkelbereich.

Eine derartige Anordnung ist besonders zweckmäßig bei einer Kombination umfassend mindestens zwei Anordnungen - bevorzugt mehrerer erfindungsgemäßer Anordnungen, insbesondere dreier. Auf diese Weise können die Drehmomentstützen der verschiedenen erfindungsgemäßen Anordnungen so positioniert werden, dass es nicht zu Kollisionen kommt bei gleichzeitig enger Annäherung der erfindungsgemäßen Anordnungen zueinander.

Hierbei ist es besonders zweckmäßig und durch die erfindungsgemäße Anordnung erst ermöglicht, dass zumindest ein Gehäuseflansch von den mindestens zwei Anordnungen in einem Winkelbereich der Umfangsrichtung radial gegenüber einer sonstigen Kreisform des Gehäuseflanschs zumindest eine derartige Aussparung aufweist, so dass die beiden Achsen der Gehäuseflansche ohne räumlich überschneidende Kollision der Gehäuseflansche bei axial im Wesentlichen auf gleicher Höhe angeordneten Gehäuseflanschen, derart nah zusammen angeordnet sind, dass es ohne die Aussparung zu einer räumlich überschneidenden Kollision der Gehäuseflansche käme. Durch diese Maßnahme können die Getriebe jedoch noch enger aneinander positioniert werden. Die erfindungsgemäße Lösung ermöglicht die Abtragung des Differenzdrehmomentes trotz des Wegfalls einiger Befestigungselemente bzw. Schrauben aufgrund der Aussparung.

Zu der Erfindung gehört außerdem ein computerimplementiertes Verfahren zur Simulation einer Anordnung nach mindestens einer zuvor erläuterten Anordnung. Daneben gehört auch ein Computerprogrammprodukt zur Durchführung dieses Verfahrens zu den Weiterbildungen der Erfindung.

Vorteile und Ausgestaltungen der Erfindung, die einzeln oder in Kombination miteinander einsetzbar sind, sind Gegenstand der Unteransprüche.

Die Erfindung bezieht sich auch auf ein computerimplementiertes Verfahren zur Simulation eine Anordnung nach mindestens einer durch die Ansprüche definierte Merkmalskombination. Dementsprechend umfasst die Erfindung einerseits das körperliche Gebilde mit den erfindungsgemäßen Merkmalen und andererseits auch einen digitalen Zwilling, wie er beispielsweise zum Zwecke der Simulation der Anordnung bzw. des Betriebes der Anordnung mittels mindestens eines Computers eingesetzt wird. Daneben bezieht sich die Erfindung auch auf ein entsprechendes Computerprogrammprodukt.

Weitere Merkmale, Eigenschaften und Vorteile der vorliegenden Erfindung ergeben sich aus der nachfolgenden Beschreibung unter Bezugnahme auf die Figuren. Darin zeigen schematisch:
- Figur 1: eine vereinfachte, dreidimensionale Darstellung einer erfindungsgemäßen Anordnung
- Figur 2: eine schematische, vereinfachte, Darstellung einer Kombination erfindungsgemäßer Anordnungen,
- Figur 3: eine vorteilhafte Weiterbildung der in Figur 2 dargestellten Kombination
- Figur 4: eine schematische Darstellung einer auf einem Computer ablaufenden Simulation einer Anordnung nach der Erfindung, Computerprogrammprodukt.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis im Verhältnis größer dimensioniert dargestellt sein.

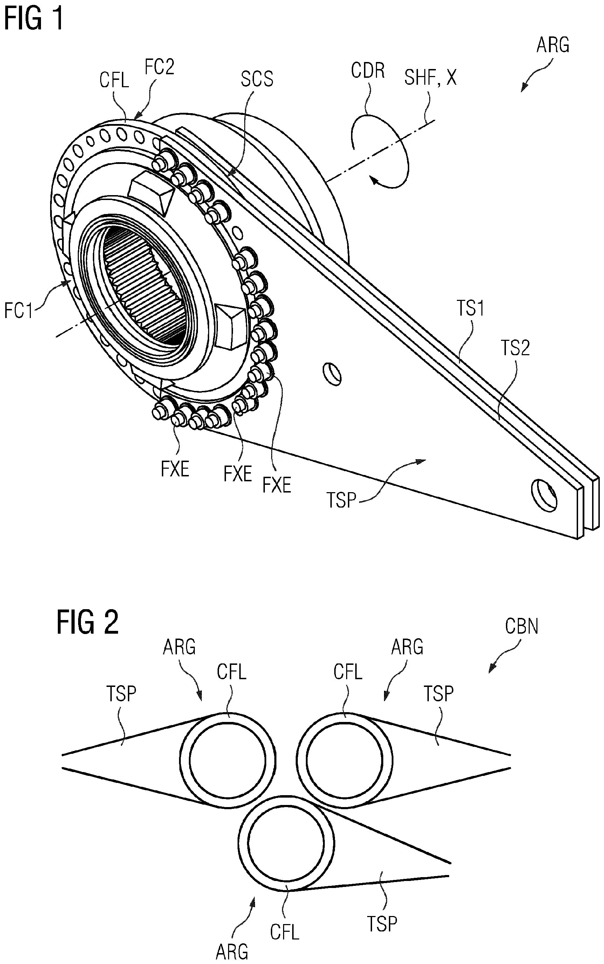

Figur 1 zeigt eine Anordnung ARG mit einem ringförmig um eine Achse X verlaufenden Gehäuseflansch CFL und einer Drehmomentstütze TSP. Eine erste Flanschanlagefläche FC1 des Gehäuseflanschs CFL ist gegen eine Stützenanlagefläche SCS der Drehmomentstütze TSP verspannbar.

Der Gehäuseflansch CFL erstreckt sich entlang einer Umfangsrichtung CDR um eine sich axial erstreckende Welle SHF der Anordnung ARG.

Der Gehäuseflansch CFL weist eine zweite Flanschanlagefläche FC2 auf (diese ist aus der Perspektive der Fig. 1 auf der abgewendeten Seite - gegenüber von der ersten Flanschanlagefläche FC1 und dementsprechend nicht direkt sichtbar; das Bezugszeichen FC1 weist dorthin) und die Drehmomentstütze TSP der Anordnung ARG umfasst eine erste Drehmomentteilstütze TS1 und eine zweite Drehmomentteilstütze TS2.

Die erste Flanschanlagefläche FC1 und eine zweite Flanschanlagefläche FC2 an dem Gehäuseflansch CFL sind als sich gegenüberliegende Anlageflächen ausgebildet. Die jeweilige Stützenanlagefläche SCS der ersten Drehmomentteilstütze TS1 und der zweiten Drehmomentteilstütze TS2 liegen derart an den Flanschanlageflächen FC1, FC2 des Gehäuseflanschs CFL an, dass der Gehäuseflansch CFL zwischen den Anlageflächen der Drehmomentstütze TSP angeordnet ist.

Der Gehäuseflansch CFL weist sich axial von der ersten Flanschanlagefläche FC1 zu der zweiten Flanschanlagefläche FC2 erstreckende Löcher HLS auf. Durch die Löcher HLS erstrecken sich Befestigungselemente FXE zur Befestigung der Drehmomentstütze TSP. Auf diese Weise sind die erste und die zweite Flanschanlagefläche FC1, FC2 des Gehäuseflanschs CFL mittels der Befestigungselemente FXE gegen die Stützenanlageflächen SCS der Drehmomentstütze TSP verspannt.

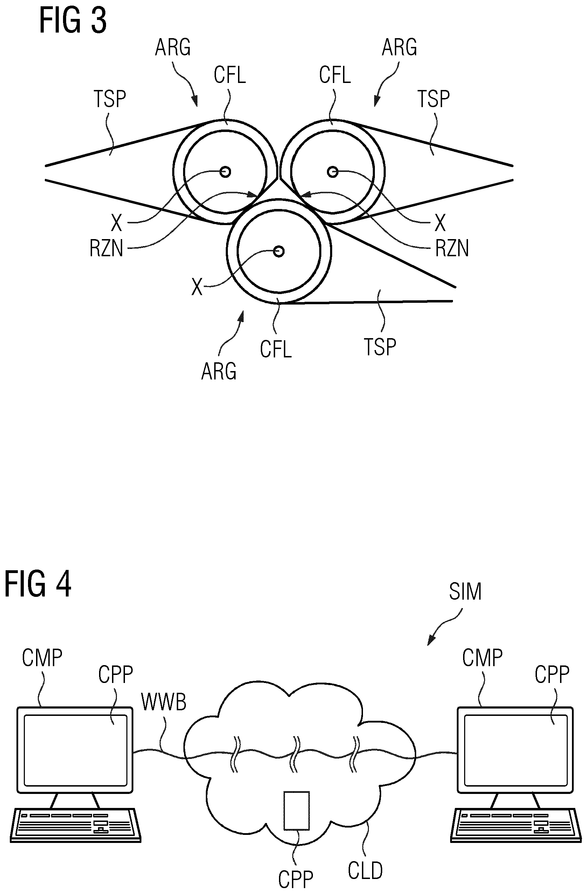

Figuren 2 und 3 zeigen eine Kombination CBN von drei erfindungsgemäßen Anordnungen ARG. Die Figur 2 illustriert hierbei, dass die erfindungsgemäßen Anordnungen ARGE aufgrund der erfindungsgemäß ermöglichten Drehmomentabstützung mit nur einem Schenkel platzsparend nahe beieinander angeordnet werden können.

Die Figur 3 zeigt eine weitergehende Maßnahme zur Platzersparnis bei einer derartigen Kombination CBN. Zumindest ein Gehäuseflansch CFL - oder mehrere - oder alle Gehäuseflansch der Beteiligten Anordnungen ARG - sind in einem Winkelbereich der Umfangsrichtung CDR radial gegenüber einer sonstigen Kreisform des Gehäuseflanschs CFL mit einer Aussparung RZN versehen. Die Aussparung RZN ist hierbei derart ausgebildet, dass die beiden Achsen (X) der Gehäuseflansche CFL ohne räumlich überschneidende Kollision der Gehäuseflansche CFL bei axial im Wesentlichen auf gleicher Höhe angeordneten Gehäuseflanschen CFL, derart nah zusammen angeordnet sind, dass es ohne die Aussparung RZN zu einer räumlich überschneidenden Kollision der Gehäuseflansche CFL käme.

Figur 4 zeigt eine schematische Darstellung einer auf einem Computer CMP - hier auf mehreren Computern CMP eines Netzwerks WWB umfassend eine Cloud CLD - ablaufenden Simulation SIM einer Anordnung ARG nach der Erfindung. Die auf den Computern CMP installierte Software ist ein Computerprogrammprodukt CPP, das bei Ausführung auf mindestens einem Computer CMP dem Benutzer mittels Schnittstellen (Bildschirm, Tastatur) eine Einflussnahme bzw. Konfiguration und einen Erkenntnisgewinn auf Basis der ausgeführten Simulation SIM ermöglicht, so dass insbesondere technische Gestaltungsentscheidungen mittels der Simulation unterstützt und verifiziert werden können.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Anordnung (ARG) mit einem zumindest abschnittsweise ringförmig um eine Achse (X) verlaufenden Gehäuseflansch (CFL) und einer Drehmomentstütze (TSP), wobei eine erste Flanschanlagefläche (FC1) des Gehäuseflanschs (CFL) gegen eine Stützenanlagefläche (SCS) der Drehmomentstütze (TSP) verspannbar ist,
**dadurch gekennzeichnet, dass**
der Gehäuseflansch (CFL) eine zweite Flanschanlagefläche (FC2) aufweist und
die Drehmomentstütze (TSP) der Anordnung (ARG) als eine erste Drehmomentteilstütze (TS1) und eine zweite Drehmomentteilstütze (TS2) ausgebildet ist,
wobei die erste Flanschanlagefläche (FC1) und eine zweite Flanschanlagefläche (FC2) an dem Gehäuseflansch (CFL) als sich gegenüberliegende Anlageflächen ausgebildet sind und die jeweilige Stützenanlagefläche (SCS) der ersten Drehmomentteilstütze (TS1) und der zweiten Drehmomentteilstütze (TS2) an den Flanschanlageflächen (FC1, FC2) des Gehäuseflanschs (CFL) derart anliegen, dass der Gehäuseflansch (CFL) zumindest teilweise zwischen den Anlageflächen der Drehmomentstütze (TSP) angeordnet ist.

2. Anordnung (ARG) nach Anspruch 1, wobei der Gehäuseflansch (CFL) sich axial von der ersten Flanschanlagefläche (FC1) zu der zweiten Flanschanlagefläche (FC2) erstreckende Löcher (HLS) aufweist, durch die sich Befestigungselemente (FXE) zur Befestigung der Drehmomentstütze (TSP) erstrecken, derart, dass die erste und die zweite Flanschanlagefläche (FC1, FC2) des Gehäuseflanschs (CFL) mittels der Befestigungselemente (FXE) gegen die Stützenanlageflächen (SCS) der Drehmomentstütze (TSP) verspannbar ist.

3. Anordnung (ARG) nach Anspruch 1 oder 2, wobei sich der Gehäuseflansch (CFL) entlang einer Umfangsrichtung (CDR) um eine sich axial erstreckende Welle (SHF) der Anordnung (ARG) erstreckt.

4. Anordnung (ARG) nach einem der vorhergehenden Ansprüche, wobei die Stützenanlagefläche (SCS) mindestens einer Drehmomentteilstütze (TS1, TS2) sich entlang der Flanschanlagefläche (FCX) zwischen 120° - 270° der Umfangsrichtung (CDR) erstrecken.

5. Anordnung (ARG) nach mindestens dem vorhergehenden Anspruch 2, wobei zumindest einige der Befestigungselemente (FXE) sich axial durch koaxiale Löcher (HLS) in den beiden Drehmomentteilstützen (TS1, TS2) und dem Gehäuseflansch (CFL) erstrecken, derart, dass mittels jeder dieser Befestigungselemente (FXE) die Flanschanlageflächen (FSC) gegen die beiden Stützenanlageflächen (SCS) der beiden Drehmomentteilstützen (TS1, TS2) verspannbar sind.

6. Anordnung (ARG) nach mindestens einem der vorhergehenden Ansprüche, wobei die beiden Drehmomentteilstützen (TS1, TS2) sich im Wesentlichen radial von dem Gehäuseflansch (CFL) fort erstrecken und jeweils in einen zumindest zu 50% identischen Winkelbereich in Umfangsrichtung (CDR) räumlich in dem Bereich benachbart zum Gehäuseflansch (CFL) angeordnet sind.

7. Kombination (CBN) umfassend mindestens zwei Anordnungen (ARG) nach mindestens einem der vorhergehenden Ansprüche, wobei zumindest ein Gehäuseflansch (CFL) von den mindestens zwei Anordnungen (ARG) in einem Winkelbereich der Umfangsrichtung (CDR) radial gegenüber einer sonstigen Kreisform des Gehäuseflanschs (CFL) zumindest eine derartige Aussparung (RZN) aufweist, so dass die beiden Achsen (X) der Gehäuseflansche (CFL) ohne räumlich überschneidende Kollision der Gehäuseflansche (CFL) bei axial im Wesentlichen auf gleicher Höhe angeordneten Gehäuseflanschen (CFL), derart nah zusammen angeordnet sind, dass es ohne die Aussparung (RZN) zu einer räumlich überschneidenden Kollision der Gehäuseflansche (CFL) käme.

8. Computerimplementiertes Verfahren zur Simulation (SIM) einer Anordnung (ARG) nach mindestens einem der vorhergehenden Ansprüche.

9. Computerprogrammprodukt (CPP) zur Durchführung eines Verfahrens nach Anspruch 8 mittels mindestens eines Computers (CMP).
